# FASCICULE DE BREVET EUROPEEN

(11) **EP 4 359 651 B1**
(45) Date de publication et mention de la délivrance du brevet: **16.04.2025**
(21) Numéro de dépôt: 22741342.4
(22) Date de dépôt: 14.06.2022
(51) Int. Cl.: F01M 11/10, F16N 29/00, F01D 25/20

(54) **DISPOSITIF DE DÉTECTION DE FUITES DANS UN CIRCUIT D'HUILE DE LUBRIFICATION D'UN MOTEUR D'AÉRONEF**
VORRICHTUNG ZUR LECKERKENNUNG IN EINEM SCHMIERÖLKREISLAUF EINES FLUGZEUGMOTORS
DEVICE FOR DETECTING LEAKS IN AN AIRCRAFT ENGINE LUBRICATING OIL CIRCUIT

(30) Priorité: 21.06.2021 FR 2106584
(43) Date de publication de la demande: 01.05.2024
(73) Titulaire: SAFRAN AIRCRAFT ENGINES, 75015 Paris (FR)
(72) Inventeur: MALLET, Thibault Maxime Adrien, 77550 Moissy-Cramayel (FR); FABBRO, Nicolas Andrea, 77550 Moissy-Cramayel (FR)
(74) Mandataire: Brevalex
(86) Numéro de dépôt international: PCT/FR2022/051145
(87) Numéro de publication internationale: WO 2022/269165

(56) Documents cités:
- EP-A1- 3 719 278
- WO-A1-2012/129898
- FR-A1- 2 691 255
- JP-U- S54 183 573
- JP-U- S54 183 574

## Description

Le sujet de la présente invention est un dispositif de détection de fuites dans un circuit d'huile de lubrification d'un moteur d'aéronef.

Les circuits d'huile de lubrification de ces moteurs instaurent une circulation permanente de l'huile entre notamment des enceintes lubrifiées, contenant par exemple des paliers de support des arbres, et des réservoirs de stockage. Cette circulation permet d'évacuer la chaleur produite par les frottements ou la proximité des gaz chauds en aval de la chambre de combustion au moyen du débit d'huile. Des échangeurs de chaleur sont généralement ajoutés aux équipements traversés par les circuits afin d'obtenir un refroidissement suffisant à maintenir l'huile à une température stable. Le fluide de refroidissement utilisé dans l'échangeur est souvent le carburant utilisé pour le fonctionnement du moteur, grâce à sa température froide initialement : le circuit du carburant croise alors le circuit d'huile dans l'échangeur.

Des fuites apparaissent si l'échangeur de chaleur est endommagé et qu'une communication s'ouvre entre les deux circuits. Dans le cas d'un refroidissement par le carburant, les fuites se produisent normalement vers le circuit d'huile, car le circuit du carburant est à une pression plus haute dans les moteurs habituels. Les inconvénients évidents sont un défaut de lubrification et un risque de débordement du circuit d'huile, et d'écoulement du liquide en excès dans le moteur, avec une pollution inévitable. Si le liquide mêlé à l'huile est du carburant, il faut encore craindre un défaut de fonctionnement du moteur par soustraction d'une partie de son combustible, et des feux du carburant quand il arrive à des endroits excessivement chauds du moteur.

Les procédés connus de détection de fuites sont plutôt empiriques et consistent par exemple à examiner la stabilité du niveau dans les réservoirs d'huile, vérifier l'absence d'odeurs de carburant, ou l'absence de feux. De tels procédés ne sont évidemment pas très fiables, ni applicables pendant le fonctionnement du moteur et un vol de l'aéronef. Il a encore été proposé des dispositifs d'évacuation de trop-pleins dans les réservoirs d'huile, mais ils sont relativement complexes, et ils interviennent seulement après qu'une quantité notable de liquide étranger a fui dans le circuit d'huile. Ils ne sont pas nécessairement conçus pour détecter les fuites, mais plutôt pour pallier leurs conséquences. Les documents FR 3 068 102, FR 2 691 255 et FR 3 074 848 A1, notamment, illustrent de tels dispositifs.

Un objet de l'invention est de proposer un dispositif de détection actif à tout moment, apte à signaler une fuite dès qu'elle commence, simple dans sa constitution et son fonctionnement et donc peu sujet aux pannes et anomalies, et ne faisant pas appel à des observations humaines.

Sous une forme générale, l'invention est donc relative à un dispositif de détection de fuites dans un circuit d'huile de lubrification d'un moteur d'aéronef entre au moins deux points du circuit, caractérisé en ce qu'il comprend un piston formé d'une pluralité de plateaux étagés sur une tige mobile qui relie lesdits plateaux, une pluralité de chambres fixes dans lesquelles les plateaux coulissent respectivement en les divisant chacune en deux compartiments séparés, deux orifices calibrés situés respectivement à deux positions distinctes du circuit, les deux compartiments de chacune des chambres étant respectivement reliés au circuit par deux conduits de liaison respectifs et distincts aboutissant sur le circuit de part et d'autre d'un orifice calibré, le dispositif comprenant encore un capteur de position ou de mouvement du piston. Les deux points du circuit sont présents chacun à l'intersection d'un des conduits de liaison avec une ligne principale du circuit

D'après une application principalement envisagée, le circuit comprend un échangeur de chaleur, et les orifices calibrés sont placés de part et d'autre de l'échangeur le long du circuit.

Avantageusement, le capteur de position ou de mouvement est relié à un dispositif de diagnostic d'anomalie, sensible à un déplacement de la tige hors d'une position d'équilibre.

D'après une généralisation possible, les plateaux, les chambres et les orifices calibrés sont chacun au moins trois.

Avantageusement, le piston est relié à un endroit fixe du dispositif par un ressort de rappel à une position initiale du piston.

Un autre aspect de l'invention est un agencement comprenant le circuit d'huile et le dispositif de détection de fuites selon ce qui précède, caractérisé en ce que l'échangeur de chaleur est aussi placé sur un second circuit, parcouru par un fluide en échange thermique avec l'huile.

Le second circuit peut être un circuit d'alimentation en carburant du moteur d'aéronef.

L'invention sera maintenant décrite en détail dans ses différents aspects, caractéristiques et avantages, au moyen des figures suivantes, qui représentent plusieurs de ses réalisations possibles, données à titre purement illustratif :
Figure 1 : un circuit de lubrification à l'huile ;
Figure 2 : une réalisation de l'invention ;
Figure 3 : cette réalisation, quand une fuite a lieu ;
Figure 4 : une variante de réalisation ;
Figure 5 : une autre réalisation possible.

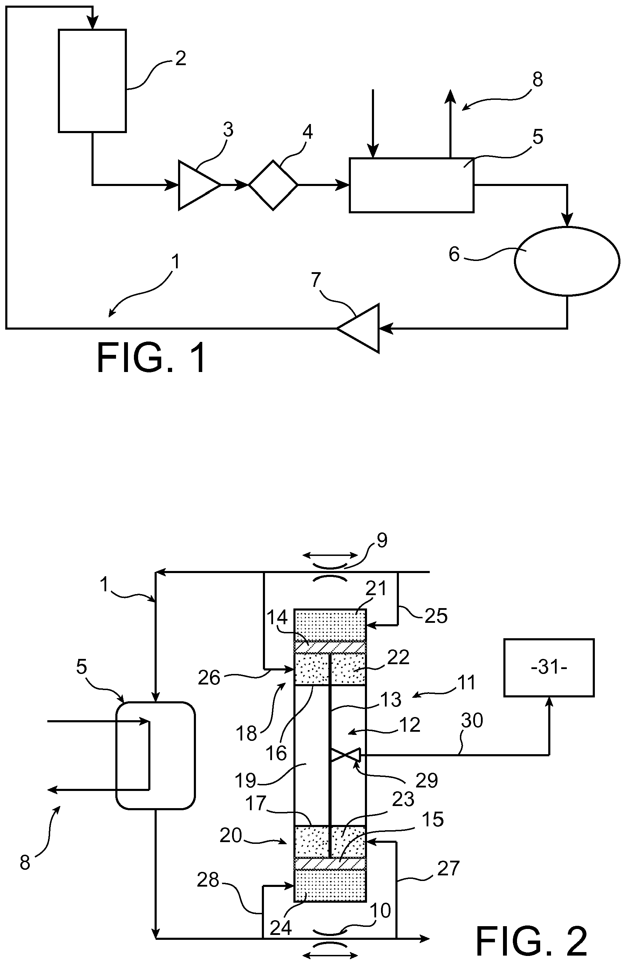

Un circuit d'huile de lubrification de moteur d'aéronef (ce moteur étant par ailleurs connu, et donc non représenté) est d'abord schématisé à la figure 1. Il comprend un conduit 1 en boucle fermée, passant successivement (d'après le sens de circulation de l'huile) par un réservoir 2 de stockage d'huile, une première pompe 3, un filtre 4, un échangeur de chaleur 5, une enceinte 6 à lubrifier du moteur, et une seconde pompe à huile 7. L'enceinte 6 peut être fermée, communiquer à l'extérieur seulement par des joints d'étanchéité à débit de fuite très faible, ou communiquer à d'autres enceintes en surpression et à atmosphère sèche, si bien que le circuit entier peut être considéré comme fermé : la quantité d'huile qu'il contient devrait rester constante ou quasiment.

L'échangeur de chaleur 5 est destiné à refroidir l'huile, et un second circuit 8 de fluide froid le traverse, qui peut être de carburant sous pression. Du carburant peut fuir dans le conduit 1 et s'accumuler dans le circuit d'huile, jusqu'à un débordement hors du réservoir 2 ou d'autres dommages, si la paroi de l'échangeur de chaleur 5 qui sépare les deux circuits (le plus souvent, un groupe de tubes parallèles dans chacun desquels un débit du carburant s'écoule) est percée.

Une première réalisation de l'invention est décrite à la figure 2. Le conduit 1 est équipé, en amont et en aval de l'échangeur de chaleur 5, de deux orifices calibrés 9 et 10. Un orifice calibré est une restriction de section d'un conduit, qui produit une perte de charge bien définie en fonction du débit de fluide qui le traverse, et qui est pour cela utilisable en débitmètre. Une enveloppe 11 cylindrique est aussi présente, et un piston 12 y coulisse le long de son axe. Le piston 12 comprend une tige 13 centrale, et deux plateaux 14 et 15 aux extrémités de la tige 13. Deux parois 16 et 17 divisent le volume interne à l'enveloppe 11 en trois chambres 18, 19 et 20 successives le long de l'axe du cylindre. La tige 13 coulisse à travers les parois 16 et 17, et les plateaux 14 et 15 se déplacent respectivement dans les chambres extrêmes 18 et 20, en les divisant chacune en deux compartiments, 21 et 22 pour la chambre 18, et 23 et 24 pour la chambre 20. Plus précisément, les compartiments 21 et 22 occupent tout le volume de la chambre 18 sauf ce qu'occupe le piston 12, et les compartiments 23 et 24 occupent de même tout le volume de la chambre 20, sauf ce qu'occupe le piston 12 ; et les plateaux 14 et 15 séparent hermétiquement, respectivement, les compartiments 21 et 22 l'un de l'autre, et 23 et 24 l'un de l'autre.

Chacun des compartiments 21 à 24 est relié au conduit 1 par un conduit de liaison, respectivement, 25 à 28, de la façon suivante. Le compartiment 21, qui est distal ou adjacent à une extrémité de l'enveloppe 11, a son conduit de liaison 25 qui mène au conduit 1 du circuit en amont du premier orifice calibré 9, lui-même en amont de l'échangeur de chaleur 5. Le compartiment 22, qui est adjacent à la chambre 19 médiane et adjacent au précédent, a son conduit de liaison 26 qui mène au conduit 1 en aval du premier orifice calibré 9, mais toujours en amont de l'échangeur de chaleur 5. Le compartiment 23, qui est un autre compartiment proximal adjacent à la chambre médiane 19, mais appartenant à la seconde chambre extrême 20, a son conduit de liaison 27 qui mène au conduit 1 en aval du second orifice calibré 10 ; et le compartiment 24, qui est le compartiment distal de la seconde chambre extrême 20, situé à l'extrémité de l'enveloppe 11 opposée à la précédente, a son conduit de liaison 28 qui mène au conduit 1 aussi en aval de l'échangeur de chaleur 5, mais en amont du second orifice calibré 10. De façon plus synthétique, chacune des chambres 18 et 20 divisée par un des plateaux 14 et 15 est associée à un orifice calibré 9 ou 10 respectif, leurs compartiments communiquent de chaque côté dudit orifice calibré 9 ou 10 associé, les compartiments distaux 21 et 24 tous d'un même côté (amont ou aval) de l'orifice calibré 9 ou 10 associé, et les compartiments proximaux 22 et 23 tous de l'autre côté. Chacun des compartiments 21 à 24 est donc occupé par de l'huile du circuit, à une pression égale à celle du point du circuit où mène leur conduit de liaison, les pertes de charge dans les conduits de liaison 25 à 28 étant négligeables, ou en tout cas égales entre elles.

Enfin, le dispositif comprend un capteur 29 de position de la tige 13, ou éventuellement de son mouvement, à l'intérieur de la chambre médiane 19, qui n'est pas occupée par un liquide ; une ligne électrique 30 relie le capteur 29 à un calculateur 31 à bord de l'aéronef et lui envoie ses mesures.

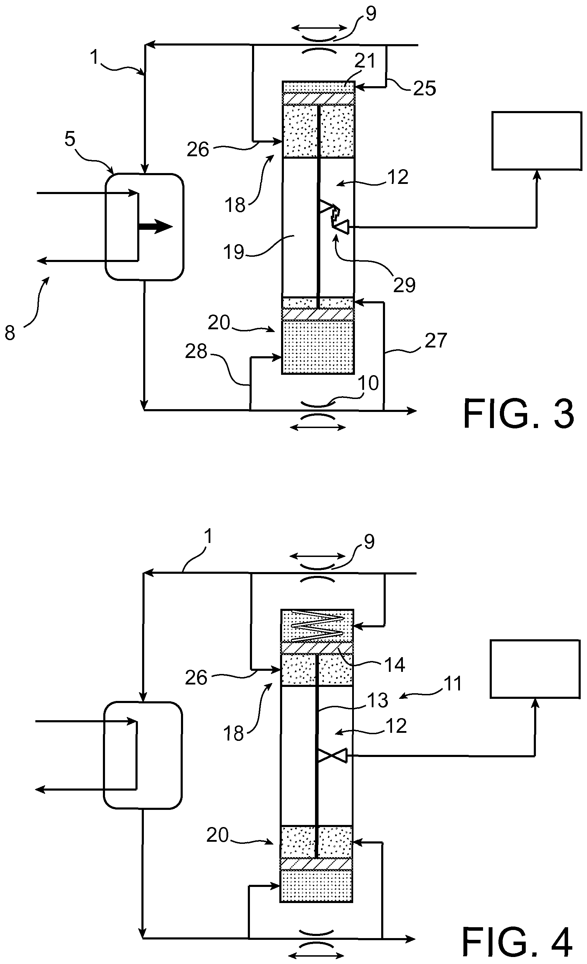

La figure 3 aide à comprendre le fonctionnement du dispositif en comparaison à la figure 2. Quand le circuit d'huile est intact et ne reçoit pas de fuites originaires du second circuit 8 (ou ne subit lui-même pas de fuites vers l'extérieur), le débit qui le parcourt reste constant, et les pertes de charges à travers les orifices calibrés ΔP9 et ΔP10 sont identiques si ces orifices calibrés 9 et 10 sont eux-mêmes identiques. Les forces de pression s'exerçant sur les deux plateaux 14 et 15, respectivement proportionnelles à ces pertes de charge, sont identiques si les plateaux 14 et 15 ont la même superficie, mais elles sont opposées, et le piston 12 reste immobile. Mais en cas de fuite, l'état de la figure 3 est obtenu, car les débits deviennent différents de part et d'autre de l'échangeur de chaleur 5 (ou plus généralement du lieu de la fuite), les pertes de charges deviennent aussi différentes à travers les orifices calibrés 9 et 10, de même que les forces antagonistes s'exerçant sur les plateaux 14 et 15 : le piston 12 se déplace. Le capteur 29 de position observe ce déplacement et émet un signal correspondant vers le calculateur 31, qui peut lancer une alarme ou ordonner une coupure du circuit ou du moteur.

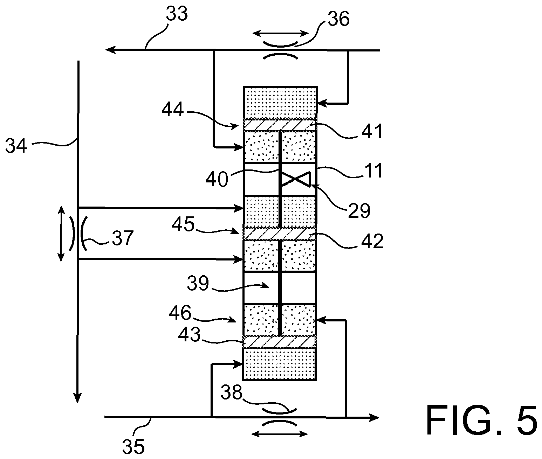

Il est manifeste que le même effet pourrait être obtenu avec des réalisations différentes ou plus complexes à partir de la description qui précède, sans donc sortir des limites de l'invention. On mentionnera néanmoins deux possibilités importantes d'amélioration ci-après. La figure 4 illustre l'addition d'un ressort 32 contraint entre l'enveloppe 11 et le piston 12 dans la direction de déplacement du piston 12, et dont le but est de ramener celui-ci à la position de départ, correspondant à l'équilibre en l'absence de fuite, c'est-à-dire à l'état de la figure 2, lorsqu'il a été déplacé par une perturbation qui a cessé. Et la figure 5 illustre un dispositif conçu pour un circuit à trois portions ou trois branches 33, 34 et 35, successives ou parallèles, dotées chacune d'un orifice calibré, respectivement 36, 37 et 38. Le dispositif comprend alors, dans l'enveloppe 11, un piston 39 dont la tige 40 porte trois plateaux 41, 42 et 43 successifs et dont chacun coulisse dans une chambre respective 44, 45 ou 46 occupant une partie de la longueur de l'enveloppe 11. Comme précédemment, chacune des chambres est divisée en deux compartiments hermétiques par le plateau qu'elle contient, et chacun des compartiments communique au circuit, respectivement en amont et en aval d'un des orifices calibrés 36, 37 et 38, auquel il est respectivement associé. Un état d'équilibre peut être obtenu par un choix judicieux des sections des chambres, qui peuvent être différentes (l'enveloppe 11 étant alors remplacée par une superposition de cylindres) et des pertes de charge par les orifices calibrés, qui peuvent être différentes, selon encore les débits, pouvant aussi être différents, prévus pour s'écouler dans chacune des branches. Comme auparavant, une fuite dans une des branches produira un déséquilibre des efforts et un déplacement du piston, qui sera détecté par le capteur 29 de position. Un tel dispositif peut permettre de détecter plus finement certaines fuites selon leur position, et même de distinguer entre certaines positions de fuites, par exemple entre l'amont et l'aval de l'orifice calibré 37 médian si les branches 33, 34 et 35 sont successives, si les sens de déplacement du piston 39 sont alors opposés.

## Revendications

1. Dispositif de détection de fuites dans un circuit (1) d'huile de lubrification d'un moteur d'aéronef entre au moins deux points du circuit, **caractérisé en ce qu'**il comprend un piston (12) formé d'une pluralité de plateaux (14, 15) étagés sur une tige (13) mobile qui relie lesdits plateaux, une pluralité de chambres (18, 20) fixes dans lesquelles les plateaux coulissent respectivement en les divisant chacune en deux compartiments (21 à 24) séparés, deux orifices calibrés (9, 10) situés respectivement à deux positions distinctes du circuit, les deux compartiments de chacune des chambres étant respectivement reliés au circuit par deux conduits de liaison (25, 26 ; 27, 28) respectifs et distincts aboutissant sur le circuit de part et d'autre d'un orifice calibré (9, 10), le dispositif comprenant encore un capteur (29) de position ou de mouvement du piston (12).

2. Dispositif de détection de fuites selon la revendication 1, **caractérisé en ce que** les orifices calibrés (9, 10) sont placés de part et d'autre d'un échangeur de chaleur (5), le long du circuit.

3. Dispositif de détection de fuites selon la revendication 1 ou 2, **caractérisé en ce que** le capteur de position ou de mouvement est relié à un dispositif de diagnostic d'anomalie (31), sensible à un déplacement de la tige (13) hors d'une position d'équilibre.

4. Dispositif de détection de fuites selon l'une quelconque des revendications 1 à 3, **caractérisé en ce que** les plateaux, les chambres et les orifices calibrés sont chacun au moins trois.

5. Dispositif de détection de fuites selon l'une quelconque des revendications 1 à 4, **caractérisé en ce que** le piston est relié à un endroit fixe du dispositif par un ressort (32) de rappel à une position initiale du piston.

6. Agencement comprenant un circuit d'huile et le dispositif de détection de fuites selon la revendication 2, **caractérisé en ce que** l'échangeur de chaleur est aussi placé sur un second circuit (8), parcouru par un fluide en échange thermique avec l'huile.

7. Agencement selon la revendication 6, **caractérisé en ce que** le second circuit est un circuit d'alimentation en carburant du moteur d'aéronef.

## Patentansprüche

1. Lecksuchvorrichtung in einem Schmierölkreislauf (1) eines Flugzeugmotors zwischen mindestens zwei Punkten des Kreislaufs, **dadurch gekennzeichnet, dass** sie einen Kolben (12) umfasst, der aus einer Vielzahl von Platten (14, 15) gebildet ist, die auf einer beweglichen Stange (13) angeordnet sind, die die Platten verbindet, mehrere feste Kammern (18, 20), in denen die Platten jeweils gleiten, indem sie jeweils in zwei getrennte Kammern (21 bis 24) aufgeteilt werden, zwei kalibrierte Öffnungen (9, 10) die sich jeweils an zwei getrennten Positionen des Kreislaufs befinden, wobei die beiden Kammern jeder der Kammern jeweils über zwei getrennte Verbindungsleitungen (25, 26; 27, 28) mit dem Kreislauf verbunden sind, die auf beiden Seiten einer kalibrierten Öffnung (9, 10) in den Kreislauf münden, wobei die Vorrichtung noch einen Positions- oder Bewegungssensor (29) des Kolbens (12) umfasst.

2. Lecksuchvorrichtung nach Anspruch 1, **dadurch gekennzeichnet, dass** die kalibrierten Öffnungen (9, 10) an beiden Seiten eines Wärmetauschers (5) entlang des Kreislaufs angeordnet sind.

3. Lecksuchvorrichtung nach Anspruch 1 oder 2, **dadurch gekennzeichnet, dass** der Positions- oder Bewegungssensor mit einer Vorrichtung zur Störungsdiagnose (31) verbunden ist, die empfindlich auf eine Bewegung der Stange (13) aus einer Gleichgewichtsposition reagiert.

4. Lecksuchvorrichtung nach einem der Ansprüche 1 bis 3, **dadurch gekennzeichnet, dass** es sich jeweils um mindestens drei Platten, Kammern und kalibrierte Öffnungen handelt.

5. Lecksuchvorrichtung nach einem der Ansprüche 1 bis 4, **dadurch gekennzeichnet, dass** der Kolben an einer festen Stelle der Vorrichtung durch eine Rückstellfeder (32) mit einer Ausgangsstellung des Kolbens verbunden ist.

6. Anordnung, die einen Ölkreislauf und die Lecksuchvorrichtung nach Anspruch 2 umfasst, **dadurch gekennzeichnet, dass** der Wärmetauscher auch auf einem zweiten Kreislauf (8) angeordnet ist, durch den ein Fluid im Wärmeaustausch mit dem Öl strömt.

7. Anordnung nach Anspruch 6, **dadurch gekennzeichnet, dass** der zweite Kreislauf ein Kraftstoffversorgungskreis des Flugzeugmotors ist.

## Claims

1. A device for detecting leaks in a lubricating oil circuit (1) of an aircraft engine between at least two points of the circuit, **characterized in that** it comprises a piston (12) formed by a plurality of plates (14, 15) stepped over a movable rod (13) which connects said plates, a plurality of fixed chambers (18, 20) in which the plates slide respectively by splitting each of them into two separate compartments (21 to 24), two calibrated ports (9, 10) located respectively at two distinct positions of the circuit, the two compartments of each of the chambers being respectively connected to the circuit by two respective and distinct connecting conduits (25, 26; 27, 28) leading to the circuit on either side of a calibrated port (9, 10), the device further comprising a sensor (29) for detecting the position or movement of the piston (12).

2. The leak detection device according to claim 1, **characterized in that** the circuit comprises a heat exchanger (5), and the calibrated ports (9, 10) are placed on either side of the heat exchanger (5) along the circuit.

3. The leak detection device according to claim 1 or 2, **characterized in that** the position or movement sensor is connected to an anomaly diagnosis device (31), sensitive to a displacement of the rod (13) out of an equilibrium position.

4. The leak detection device according to any one of claims 1 to 3, **characterized in that** the plates, the chambers and the calibrated ports are each at least three in number.

5. The leak detection device according to any one of claims 1 to 4, **characterized in that** the piston is connected to a fixed location of the device by a return spring (32) at an initial position of the piston.

6. An arrangement comprising the oil circuit and the leak detection device according to claim 2, **characterized in that** the heat exchanger is also placed on a second circuit (8), through which a fluid flows in heat exchange with the oil.

7. The arrangement according to claim 6, **characterized in that** the second circuit is a fuel supply circuit of the aircraft engine.
